(19) **Europäisches Patentamt / European Patent Office / Office européen des brevets**

(11) **EP 2 011 672 B1**

(12) **EUROPEAN PATENT SPECIFICATION**

(45) Date of publication and mention
of the grant of the patent:
**30.09.2009 Bulletin 2009/40**

(51) Int Cl.:
***B60C 11/13*** *(2006.01)*

(21) Application number: **08011809.4**

(22) Date of filing: **30.06.2008**

(54) **Pneumatic tire with symmetrical tread pattern**

Luftreifen mit symmetrischem Laufflächenprofil

Pneumatique avec bande de roulement symétrique

(84) Designated Contracting States:
**DE FR GB**

(30) Priority: **02.07.2007 KR 20070065992**
**26.06.2008 KR 20080060667**

(43) Date of publication of application:
**07.01.2009 Bulletin 2009/02**

(73) Proprietor: **Kumho Tire Co., Inc.**
**Gwangsan-gu**
**Gwangju-si (KR)**

(72) Inventor: **Kim, Sang-Hyeon**
**Gimhae-si**
**Gyeongsangnam-do (KR)**

(74) Representative: **Herrmann, Uwe et al**
**Lorenz - Seidler - Gossel**
**Widenmayerstrasse 23**
**80538 München (DE)**

(56) References cited:
**EP-A- 1 541 383**          **EP-A- 1 568 514**
**WO-A-95/18022**          **GB-A- 2 363 100**
**US-A1- 2001 032 691**          **US-B1- 6 505 661**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates to a pneumatic tire with symmetrical tread pattern, and more specifically, to a pneumatic tire with symmetrical tread pattern wherein a plurality of protrusions are arranged on the bottom surface of the longitudinal groove along the circumferential direction of the tire to form a water turbulence line that can facilitate discharge of the fluid flowed in through the longitudinal grooves and that can improve the flow of the fluid in the transverse direction thereby reducing the phenomena of hydroplaning that can occur while driving in the rain.

**Background Art**

Generally, a pneumatic tire is designed to obtain the objective of comfort in riding, the elimination of unwanted noise, the controllability, the drainage, and other performances.

The pneumatic tire includes the inner liner that composes the inner part of the tire, the body ply that is laminated with the circumference of the inner liner, the belt that is laminated with the circumference of the body ply, the tread that contacts with the ground and is laminated with the circumference of the belt, the sidewall on each side that composes the tire's each side part, and the bead on each side that is attached to the wheel maintaining the air pressure.

In order to maintain the basic function of the tire described above, which include dry or wet traction function, and maintaining the noise performance, the tread block is formed in the tread by the grooves that includes a plurality of longitudinal grooves that is formed along the circumference direction of the tread and the plurality of transverse grooves that is formed along the width direction of the tread. The tread's outer shape that is formed by the grooves and the tread block are usually referred as the tread pattern.

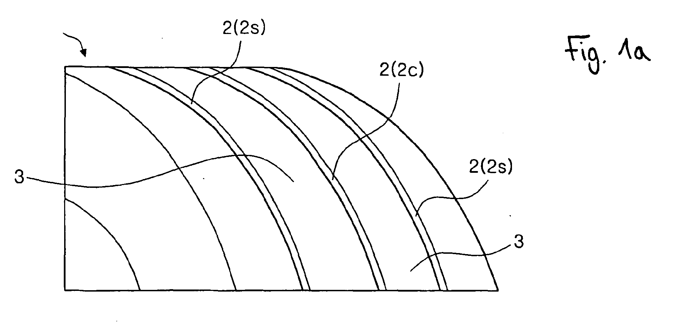

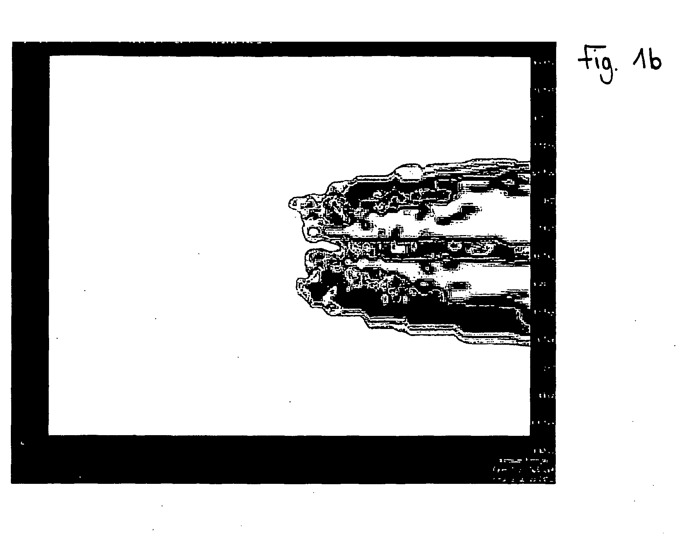

As shown in Fig. 1a, the tread pattern described above can be referred to as a symmetrical tread pattern that the longitudinal groove 2s and the rib block 3 is formed symmetrically on both sides of the longitudinal groove 2c formed in the circumferential direction at the center of the tread 1. The Fig. 1b is the analysis of the hydroplaning of the pneumatic tire with symmetrical tread pattern.

However the pneumatic tire shown in Fig. 1 can lead to a big accident due to the lack of steering force that transfers to the road surface caused by materials that can influx between the tread 1 of the tire while driving and the road surface causing the tread 1 to go off the road surface. This phenomenon of the tire going off the surface of the road when driving above a certain speed due to the material that influx is known as hydroplaning and causes most of the accidents on wet road surface.

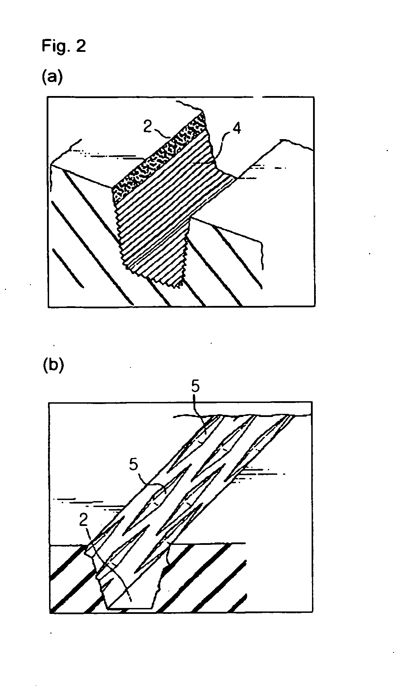

The Fig. 2a and Fig. 2b shows the various conventional tread patterns suggested to improve such hydroplaning.

The Fig. 2a shows a pneumatic tire with a plurality of protrusions that are formed on the bottom and on the wall of the longitudinal groove 2. Also Fig. 2b shows a pneumatic tire with a plurality of protrusions 5 that are formed in a certain arrangement on the wall with fixed sequence of the longitudinal groove 2.

However, the purpose of the tire with the above protrusions 4, 5 are to improve the flow of the fluid by reducing the friction with the viscosity of the fluid, but there are problems because such flow of the fluid is based on general interpretation of hydromechanics yielding less effective results.

Document US-A-2001/032691 discloses the features of the preamble of claim 1.

**Disclosure**

The present invention has been designed in consideration of the above problems of conventional art and has the object of providing a pneumatic tire with symmetrical tread pattern which can reduce hydroplaning phenomena by uniformly forming a plurality of protrusions on the bottom surface of the longitudinal groove to form a water turbulence line that can facilitate discharge of the fluid flowed in through the longitudinal groove and that can improve the flow of the fluid in the transverse direction.

To obtain the above objective, the pneumatic tire with symmetrical tread pattern according to the present invention includes longitudinal grooves and sub-rib blocks formed symmetrically on both sides of the main rib block formed at the center of the tread, and transverse grooves formed on the sub-rib blocks, and a plurality of protrusions with triangular shape in cross-section are arranged on the bottom surface of the longitudinal groove in inclined fashion toward the direction of the transverse grooves which are inclined with predetermined angle to form a water turbulence line that can facilitate discharge of the fluid flowed in through the longitudinal grooves and that can improve the flow of the fluid in the transverse direction, the protrusions being twisted clockwise in the longitudinal direction thereof.

Also, the height of the protrusion, h, the width of the protrusion, w and the distance between the protrusions, p satisfies the following relation:

$$h = 0.5\text{-}1.0mm, \quad w = 0.7h\text{-}h, \ p = 1.2w\text{-}5.0w.$$

It is preferable that 8 - 30 protrusions are formed on the bottom surface of the longitudinal groove along the circumferential direction of the tire.

**Effect**

As described above, according to the pneumatic tire with symmetrical tread pattern of the present invention, by forming a plurality of protrusions on the bottom surface of the longitudinal groove in a inclined fashion toward the direction of the transverse grooves to form a water turbulence line that can facilitate discharge of the fluid flowed in through the longitudinal groove and that can improve the flow of the fluid in the transverse direction, the phenomena of hydroplaning that can occur while driving in the rain can be reduced thereby preventing accidents due to the phenomena.

**Brief Description of Drawings**

Fig. 1 illustrates a conventional pneumatic tire with symmetrical tread pattern and an analysis of the hydroplaning phenomenon.

Fig. 2a and Fig. 2b illustrate other examples of conventional pneumatic tires with symmetrical tread pattern.

Fig. 3 is a front view of the pneumatic tire with symmetrical tread pattern according to the present invention.

Fig.4 is a cross-sectional view of A region of Fig. 3 cut along the circumferential direction.

Fig. 5a through Fig. 5c are the protrusion formed along the bottom surface of the longitudinal groove viewed in various direction.

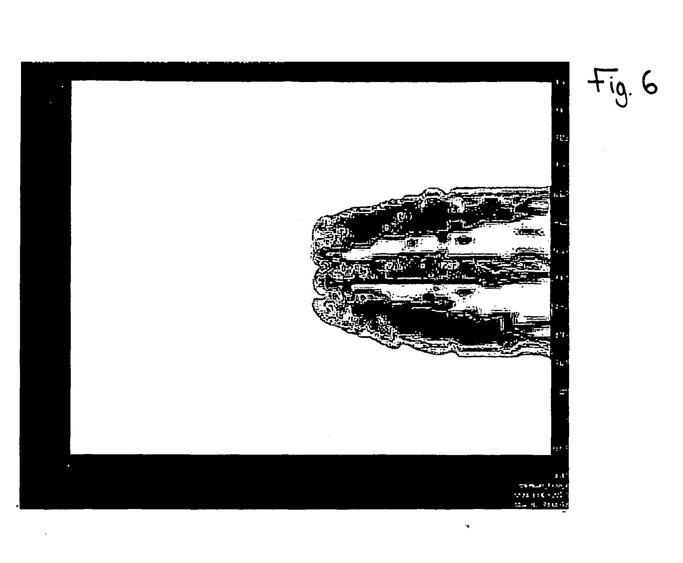

Fig 6 shows an analysis of the hydroplaning phenomenon with the pneumatic tire with symmetrical tread pattern according to the present invention.

Description of the numerals in the drawings

| | |
|---|---|
| 10: tread | 11: main rib block |
| 12, 13: longitudinal groove | 14, 15: sub-rib block |
| 16: minor groove | 17, 18: transverse groove |
| 19: protrusion | h: height of protrusion |
| p: distance between protrusions | w: width of protrusion |

**Modes of the Invention**

The invention according to the present application will now be described with reference to the drawings attached and the features and advantages of the present invention will be clear from the description. The terms and expressions used in the specification and claims are meant to describe the invention in the best way for the inventors and should be interpreted as such.

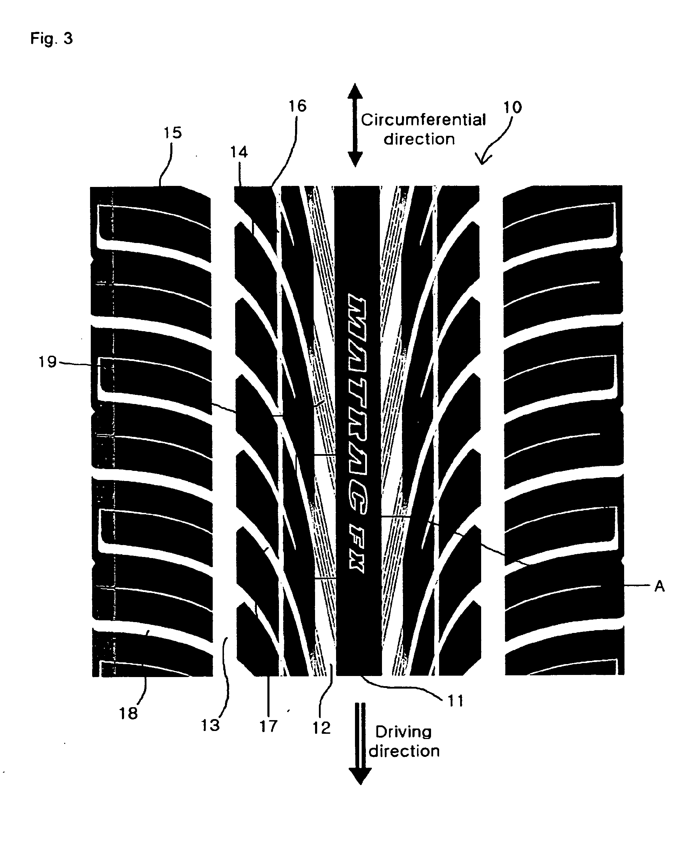

Fig. 3 illustrates the pneumatic tire with symmetrical tread pattern according to the present invention.

The pneumatic tire according to the present invention, as shown in Fig. 3, provides a symmetrical tread pattern wherein longitudinal grooves 12, 13 and sub-rib blocks 14, 15 are symmetrically on both sides of the main rib block 11 formed at the center of the tread 10, and transverse grooves 17, 18 are formed on the sub-rib block 14, 15. The numeral 16 represents minor rib block. The transverse grooves 17, 18 are formed in a inclined fashion with predetermined angle. This tread pattern of the present invention is a pattern having directional features.

A plurality of protrusions 19 are arranged on the bottom surface of the longitudinal groove 12 in inclined fashion toward the direction of the transverse grooves 17 to form a water turbulence line that can facilitate discharge of the fluid flowed in through the longitudinal groove 12 and that can improve the flow of the fluid in the transverse direction.

Due to the protrusions 19, the fluid flowed in through the longitudinal groove 12 collides with the protrusions 19 and form a turbulent flow so that the fluid can be easily discharged in the direction of the transverse grooves 17.

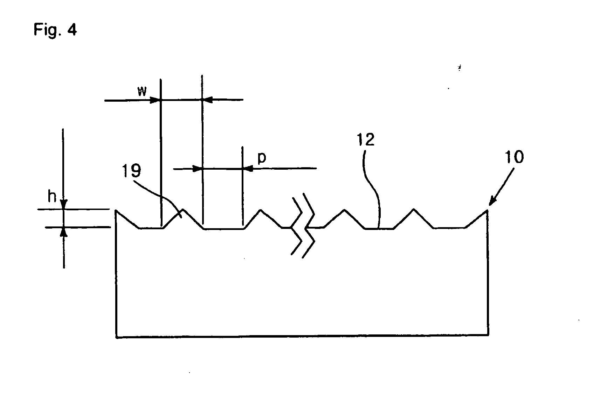

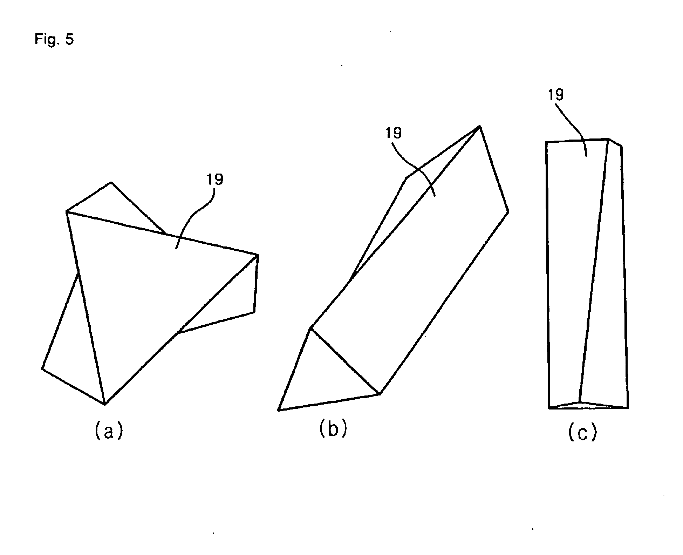

Fig. 4 is a cross-sectional view of the longitudinal groove 12 on which the protrusions 19 are formed cut in the circumferential direction, and Fig. 5 shows the protrusions 19 viewed in various directions.

As shown in Fig. 4 and Fig. 5, the protrusions 19 have preferably triangular shape in cross-section. By forming protrusions 19 in a triangular cross-sectional shape, the discharge of the fluid is facilitated through the inclined plane.

Also, as shown in Fig. 5, the protrusions 19 are preferably twisted clockwise in the longitudinal direction thereof. Due to the protrusions 19 twisted with predetermined angle, the fluid forms a turbulent flow after colliding with the protrusions 19 and can be easily discharged in the opposite direction of driving, and also can be discharged to the direction of the transverse grooves 17 due to the twisted plane.

According to the present invention, as shown in Fig. 4 and Fig. 5, the following relations are preferably satisfied among the height of the protrusion 19, h, the width of the protrusion 19, w and the distance between the protrusions 19, p,

$$h = 0.5\text{-}1.0mm, \quad w = 0.7h\text{-}h, \quad p = 1.2w\text{-}5.0w.$$

Further, it is preferable that 8 - 30 protrusions 19 are formed on the bottom surface of the longitudinal groove along the circumferential direction

According to the pneumatic tire with symmetrical tread pattern of the present invention, by forming a plurality of protrusions 19 on the bottom surface of the longitudinal groove 12 in the same direction as the direction of the transverse groove 17, the fluid flowed in through the longitudinal groove 12 forms a turbulent flow after colliding with the inclined plane of the protrusions 19 and is discharged in the circumferential direction through the inclined plane of the protrusions 19, and at the same time the direction of the transverse grooves 17.

Due to the feature of the pneumatic tire of the present invention, the tread 10 is prevented from separating from the road surface by the fluid flowed in through the longitudinal groove 12, and the steering force of the vehicle is transferred to the road surface more efficiently.

Comparing the results of analysis of the hydroplaning phenomena of the conventional tire as shown in Fig. 1 and that of the tire according to the present invention, the hydroplaning phenomena is reduced by about 5-10% in the tire according to the present invention.

## Claims

1. A pneumatic tire with symmetrical tread pattern (10), including longitudinal grooves (12,13) and sub-rib blocks (14,15) formed symmetrically on both sides of the main rib block (11) formed at the center of the tread, and transverse grooves (17,18) formed on the sub-rib blocks (14,15),
   **characterised in that** a plurality of protrusions (19) with triangular shape in cross-section are arranged on the bottom surface of the longitudinal grooves (12) in an inclined fashion toward the direction of the transverse grooves (17) which are inclined with predetermined angle to form a water turbulence line that can facilitate discharge of the fluid flowed in through the longitudinal grooves (12,13) and that can improve the flow of the fluid in the transverse direction, the protrusions (19) being twisted clockwise in the longitudinal direction thereof.

2. The pneumatic tire with symmetrical tread pattern according to claim 1. wherein the protrusions (19) are formed so that the following relations are satisfied among the height of the protrusion (19), h, the width of the protrusion (19), w and the distance between the protrusions (19), p,
   h = 0.5-1.0mm, w = 0.7h-h, p = 1.2w-5.0w.

3. The pneumatic tire with symmetrical tread pattern according to claim 1, wherein 8 - 30 protrusions (19) are formed on the bottom surface of the longitudinal groove (17,18) along the circumferential direction of the tire.

**Patentansprüche**

1. Luftreifen mit symmetrischem Profilmuster (1a), welcher Längsrillen (12, 13) und symmetrisch an beiden Seiten des in der Mitte des Profils ausgebildeten Hauptrippenblocks (11) ausgebildete Unterrippenblöcke (14, 15) und an den Unterrippenblöcken (14, 15) ausgebildete Schrägrillen (17, 18) umfasst,
**dadurch gekennzeichnet, dass** mehrere Vorsprünge (19) mit im Querschnitt Dreiecksform auf der unteren Fläche der Längsrillen (12) in Richtung zu den Schrägrillen (17) geneigt angeordnet sind, die bei einem vorbestimmten Winkel geneigt sind, um eine Wasserturbulenzlinie auszubilden, die die Drainage des durch die Längsrillen (12, 13) eingeströmten Fluids erleichtern kann und den Strom des Fluids in Querrichtung verbessern kann, wobei die Vorsprünge (19) in der Längsrichtung derselben im Uhrzeigersinn verdreht sind.

2. Luftreifen mit symmetrischem Profilmuster nach Anspruch 1, **dadurch gekennzeichnet, dass** die Vorsprünge (19) so ausgebildet sind, dass die folgenden Beziehungen zwischen der Höhe des Vorsprungs (19) h, der Breite des Vorsprungs (19) w und dem Abstand zwischen den Vorsprüngen (19) p erfüllt sind:
h = 0,5-1,0mm, w = 0,7h-h, P = 1,2w-5,0w.

3. Luftreifen mit symmetrischem Profilmuster nach Anspruch 1, **dadurch gekennzeichnet, dass** 8 - 30 Vorsprünge (19) an der unteren Fläche der Längsrille (17,18) entlang der Umfangsrichtung des Reifens ausgebildet sind.

**Revendications**

1. Bandage pneumatique avec un motif de bande de roulement symétrique (10), comportant des rainures longitudinales (12, 13) et des blocs sous-nervurés (14, 15) formés symétriquement sur les deux côtés du bloc nervuré principal (11) formé au centre de la bande de roulement, et des rainures transversales (17, 18) formées sur les blocs sous-nervures (14, 15),
**caractérisé en ce qu'**une pluralité de saillies (19) d'une forme triangulaire en section transversale sont agencées sur la surface inférieure de la rainure longitudinale (12) d'une manière inclinée dans la direction des rainures transversales (17) qui sont inclinées selon un angle prédéterminé pour former une ligne de turbulence d'eau qui peut faciliter l'évacuation du fluide s'écoulant à travers les rainures longitudinales (12, 13) et qui peut améliorer l'écoulement du fluide dans la direction transversale, les saillies (19) étant tordues dans le sens des aiguilles d'une montre dans leur direction longitudinale.

2. Bandage pneumatique avec un motif de bande de roulement symétrique selon la revendication 1, dans lequel les saillies (19) sont formées de façon que les relations suivantes sont satisfaites parmi la hauteur de la saillie (19), h, la largeur de la saillie (19), w et la distance entre les saillies (19), p,
h = 0,5-1,0 mm, w = 0,7h-h, p = 1,2 w- 5,0 w

3. Bandage pneumatique avec un motif de bande de roulement symétrique selon la revendication 1, dans lequel 8 à 30 saillies (19) sont formées sur la surface inférieure de la rainure longitudinale (17, 18) dans la direction circonférentielle du bandage.

2(2s)

2(2c)

2(2s)

3

3

Fig. 1a

fig. 1b

Fig. 2

(a)

(b)

Fig. 3

Fig. 4

Fig. 5

(a)                    (b)                    (c)

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001032691 A